# EUROPÄISCHE PATENTSCHRIFT

(11) **EP 3 887 261 B1**
(45) Veröffentlichungstag und Bekanntmachung des Hinweises auf die Patenterteilung: **28.02.2024**
(21) Anmeldenummer: 19791194.4
(22) Anmeldetag: 17.10.2019
(51) Int. Cl.: B65C 9/04, B65C 3/26, B65C 9/06

(54) **ZENTRIERKONUS ZUM FIXIEREN EINES STEHENDEN BEHÄLTERS**
CENTERING CONE FOR FIXATION OF A STANDING CONTAINER
CÔNE DE CENTRAGE POUR LA FIXATION D'UN RÉCIPIENT EN POSITION VERTICALE

(30) Priorität: 28.11.2018 DE 202018106765 U
(43) Veröffentlichungstag der Anmeldung: 06.10.2021
(73) Patentinhaber: Krones AG, 93073 Neutraubling (DE)
(72) Erfinder: FIEGLER, Rudolf, 93073 Neutraubling (DE)
(74) Vertreter: Grünecker Patent- und Rechtsanwälte PartG mbB
(86) Internationale Anmeldenummer: PCT/EP2019/078135
(87) Internationale Veröffentlichungsnummer: WO 2020/108843

(56) Entgegenhaltungen:
- EP-A1- 2 845 813
- EP-A2- 1 251 074
- EP-A2- 2 332 845

## Beschreibung

Die Erfindung betrifft einen Zentrierkonus zum Fixieren eines, insbesondere auf einem Zentrierteller, stehenden Behälters und zum Zuführen von Reinluft in den Behälter zur Erhöhung des Innendrucks des Behälters durch einen Luftauslass des Zentrierkonus hindurch.

Bei der Leeretikettierung oder auch allgemein bei der Bearbeitung von leeren Behältern, insbesondere PET-Behältern, werden stehende Behälter meist mit einem Zentrierkonus fixiert, indem der Zentrierkonus von oben auf den Behälter drückt, so dass der Behälter zwischen der Standfläche und dem Zentrierkonus eingeklemmt ist. Insbesondere aufgrund der sich zum Behälter hin verjüngenden Form des Zentrierkonus kann der Behälter unter normalen Produktionsbedingungen nicht seitlich verrutschen, da der Zentrierkonus ein Stück weit in den Flaschenhals hinein ragt.

Behälterbearbeitungsmaschinen (im Folgenden auch einfach Maschinen) wie Etikettiermaschinen weisen mindestens eine Bearbeitungsstation auf, zu der die Behälter, meist auf Zentriertellern, stehend und je mit einem Zentrierkonus fixiert transportiert werden. Dabei laufen die Zentrierteller und die Zentrierkonen synchron. In vielen Fällen umfassen die Maschinen Transportkarusselle, bei denen mehrere Zentrierteller und Zentrierkonen um eine Drehachse umlaufend angeordnet sind. Die Behälter durchlaufen dann auf den Zentriertellern stehend einen Teil einer Kreisbahn, vorbei an der bzw. den Bearbeitungsstationen. Bei Etikettiermaschinen wird das Transportkarussell auch als Etikettier-Karussell bezeichnet, weil Behälter etikettiert werden während sie in diesem Karussell transportiert werden.

Im Betrieb wird der Behälter mit Luft, die diesem durch den Zentrierkonus hindurch zugeführt wird, beaufschlagt. Dies dient zur Stabilisierung des Behälters durch den erhöhten Innendruck. Diese Stabilisierung verhindert, dass durch das Drücken des Zentrierkonus auf den Behälter, insbesondere beim Absenken des Zentrierkonus auf den Behälter zum Fixieren des Behälters, der Behälter zusammengedrückt und somit beschädigt wird. Für eine ausreichende Stabilisierung muss ein Mindestvolumen Luft in den Behälter gebracht werden, so dass in dem Behälter innerhalb einer vorgegebenen Zeit ein vorgegebener Mindestdruck aufgebaut wird. Der Zentrierkonus kann also als Düse betrachtet werden.

Die Luft wird zunächst dem feststehenden Teil der Maschine zugeführt. Typischerweise durchläuft die Luft beim Eintritt in die Maschine eine Filtereinheit. Wenn die Maschine ein Transportkarussell aufweist, wird anschließend die gefilterte Luft, beispielsweise über einen Luftdrehverteiler, vom feststehenden Teil der Maschine an das drehbare Karussell übertragen und dort mittels eines Verteilers zu den Zentrierkonen geleitet.

Jeder Zentrierkonus kann derart ausgebildet und angeordnet sein, dass der Luftkanal mit einem mechanischen Hubmechanismus freigeschaltet wird, wenn der Zentrierkonus auf den Behälter aufgesetzt wird.

Ein Zentrierkonus gemäß dem Oberbegriff des Anspruchs 1 ist aus EP 1 251 074 A2 bekannt. Weitere Zentrierkonen sind in EP 2 845 813 A1 und EP 2 332 845 A2 offenbart.

Bei dieser Anordnung entsteht Abrieb in beweglichen, insbesondere drehenden Teilen, beispielsweise in den Zentrierkonen und, sofern vorhanden, dem Luftdrehverteiler. Durch den Abrieb entstandene Fremdpartikel gelangen also in den Luftstrom der durch die Maschine strömenden Luft. Solche Fremdpartikel sollen jedoch nach Möglichkeit nicht in den Behälter gelangen, insbesondere in der Lebensmittelbearbeitung.

Manche Mittel, mit denen möglicherweise verhindert werden könnte, dass die Fremdpartikel in den Behälter gelangen, führen jedoch dazu, dass der Luftstrom nicht mehr zuverlässig zur Stabilisierung der Behälter ausreicht.

Bei den bekannten Anlagen besteht also das Problem, dass nicht ausreichend sichergestellt ist, dass durch Abrieb entstehende Fremdpartikel nicht zusammen mit dem Luftstrom in den Behälter gelangen und dass zugleich genügend Luft zur Stabilisierung in die Behälter gelangt. Die der Erfindung zugrundeliegende Aufgabe besteht also darin, zu ermöglichen, dass genügend Luft zur Stabilisierung in die Behälter gelangt und zugleich verhindert wird, dass durch Abrieb entstehende Fremdpartikel zusammen mit dem Luftstrom in den Behälter gelangen.

Bei einem Zentrierkonus zum Fixieren eines, insbesondere auf einem Zentrierteller, stehenden Behälters und zum Zuführen von Reinluft (auch als sterile Luft bezeichnet) in den Behälter zur Erhöhung des Innendrucks des Behälters durch einen Luftauslass des Zentrierkonus hindurch, wird das Problem dadurch gelöst, dass der Luftauslass durch eine Durchlassöffnung mit einem Sieb gebildet wird oder der Luftauslass durch mindestens zwei einzelne Durchlassöffnungen gebildet wird.

Mit anderen Worten ist der Zentrierkonus in beiden Alternativen derart ausgebildet, dass der Strömungsquerschnitt vor dem Austreten der Luft aus dem Zentrierkonus verengt ist.

Der Vorteil einer, insbesondere einzigen, Durchlassöffnung mit einem Sieb ist, dass durch eine solche Durchlassöffnung der Luftstrom kaum behindert wird und somit genug Luft zur Stabilisierung des Behälters aus dem Zentrierkonus ausströmen kann, zugleich jedoch sichergestellt wird, dass Fremdpartikel ausreichend zurückgehalten werden.

Der Vorteil von mindestens zwei einzelnen Durchlassöffnungen ist, dass die Durchlassöffnungen bei einer vorgegebenen Gesamtquerschnittsfläche der Öffnungen jeweils einen kleineren Durchmesser aufweisen können als eine einzige Durchlassöffnung. Dadurch werden Fremdpartikel besser zurückgehalten.

Diese Alternative kann als ein Zentrierkonus mit einem integral mit dem Körper des Zentrierkonus ausgebildeten, siebartigen Element betrachtet werden. Die Durchlassöffnungen entsprechen dann den Sieb-Maschen. Der Vorteil einer solchen Mehrzahl von Durchlassöffnungen ist auch, dass Verunreinigungen, die beim Einsetzen eines Siebs entstehen könnten, vermieden werden können und dass ein fehlerhafter Zusammenbau ausgeschlossen ist.

Die Anzahl der Durchlassöffnungen richtet sich im Wesentlichen danach, wie groß deren Durchmesser sein soll und wie viel Luft durch den Luftauslass austreten soll. Das heißt, je kleiner die Öffnungen, desto mehr Öffnungen können vorgesehen sein.

Als Zentrierkonus wird in dieser Anmeldung ein Element verstanden, dessen Körper zumindest einen Bereich mit einer sich verjüngenden Mantelfläche sowie eine Grundfläche und eine Deckfläche aufweist, also ein Bereich mit einer Kegelstumpfform, wobei die Grundfläche des Kegelstumpfs beispielsweise eine Kreisfläche sein kann. Die Bezeichnung "Konus" schließt nicht aus, dass das Element auch Bereiche aufweist, in denen der Körper keine konische Form hat. Beispielsweise kann der Kegelstumpf-Bereich sich an einen Bereich anschließen, der eine andere Form aufweist. Die einzige Einschränkung ist dabei, dass der Kegelstumpf an der Seite mit der Deckfläche freistehend ist, sprich, sich an dieser Seite keine weiteren Bereiche an den Kegelstumpf anschließen bzw. dass diese Seite ein Ende des Zentrierkonus bildet. Das hat zur Folge, dass das mit den Behältern wechselwirkende Ende des Zentrierkonus eine sich zu den Behältern hin verjüngende Form aufweist. So kann dieses Ende des Zentrierkonus in den Behälter hineinragen und diesen somit zentrieren und stabilisieren.

Der Luftauslass ist in dem Körper des Zentrierkonus ausgebildet und erstreckt sich vom Inneren des Zentrierkonus zur Deckfläche des Kegelstumpfs hin.

Der Zentrierkonus weist weiterhin einen Lufteinlass auf. Auch der Lufteinlass ist im Körper des Zentrierkonus und in Form mindestens einer Durchlassöffnung ausgebildet. Der Lufteinlass und der Luftauslass sind fluidisch miteinander verbunden.

Der Zentrierkonus ist also derart ausgebildet, dass Luft durch den Lufteinlass in das Innere des Zentrierkonus hinein, durch das Innere des Zentrierkonus hindurch, und durch den Luftauslass aus dem Inneren des Zentrierkonus herausströmen kann.

Als Durchlassöffnung wird ein in einem Materialstück, hier im Körper des Zentrierkonus, ausgebildeter Durchgang bezeichnet, der derart ausgebildet ist, dass Luft hindurchströmen kann, wobei der Durchgang im Luftauslass sich vom Inneren des Zentrierkonus hin nach außen, also beispielsweise bis zu der Deckfläche des Kegelstumpfs hin, erstreckt.

Die Durchlassöffnung kann eine kreisförmige Querschnittsfläche haben. Andere Formen der Querschnittsfläche, insbesondere polygonal oder elliptisch, sind ebenfalls denkbar.

Die Durchlassöffnung kann einen entlang ihrer Länge konstanten Durchmesser aufweisen oder einen veränderlichen Durchmesser haben, insbesondere sich vom Inneren des Zentrierkonus nach außen hin verjüngend ausgebildet sein. Dabei wird bei einem nicht-kreisförmigen Querschnitt die Länge der Ellipsen-Halbachse bzw. der längsten Diagonale als Durchmesser betrachtet. Der Durchmesser an der entlang der Länge der Durchlassöffnung schmalsten Stelle wird als Minimaldurchmesser der Durchlassöffnung bezeichnet. Die Durchlassöffnung kann derart ausgebildet sein, dass der Querschnitt der Durchlassöffnung am, bezogen auf den Körper des Zentrierkonus, äußeren Ende der Durchlassöffnung den Minimaldurchmesser aufweist.

Ein Sieb ist ein Element, das Maschen mit einer bestimmten Maschenweite aufweist, wobei durch die Maschen Luft strömen kann. Die Maschenweite bestimmt, welche Fremdpartikel zurückgehalten werden oder durch das Sieb durchtreten. Das Sieb kann in verschiedensten Formen ausgebildet sein, insbesondere kann es eine Lochplatte, ein Material-Gewebe oder ein Gitter umfassen, welche jeweils die Sieb-Maschen umfassen. Der Siebteil mit den Maschen kann beispielsweise aus Metall, Kunststoff oder einem Fasergewebe ausgebildet sein. Das Sieb hat vorzugsweise eine Maschenweite im Bereich von 50 µm und 2000 µm insbesondere 200 µm und 1000 µm, insbesondere 300 µm und 800 µm

Es versteht sich, dass das Sieb dabei derart ausgebildet und angeordnet ist, dass sämtliche Luft, die durch den Luftauslass strömt, das Sieb durchläuft. Das heißt, dass die Luft nicht an diesen vorbei strömen kann. Mit anderen Worten erstreckt sich das Sieb über den gesamten Querschnitt der Durchlassöffnung.

Der Luftauslass, und somit auch das Sieb, kann bezogen auf die Strömungsrichtung der Luft im ordnungsgemäßen Betrieb, stromabwärts von allen beweglichen Teilen des Zentrierkonus angeordnet sein.

Das Sieb kann lösbar in der Betriebsposition befestigbar sein, insbesondere mittels einer werkzeuglosen Verbindung, beispielsweise einer Steckverbindung. Dies ermöglicht es, das Sieb auszutauschen, beispielsweise aufgrund von Verschleiß oder angesichts geänderter technischer Anforderungen, und/oder das Sieb zur Reinigung und/oder Wartung zu entnehmen.

Die Betriebsposition ist dabei die Position, in der das Sieb im Betrieb ordnungsgemäß angeordnet sind, so dass Fremdpartikel zurückgehalten werden, insbesondere die Position, in der das Sieb sich über den gesamten Querschnitt der Durchlassöffnung erstreckt.

Das Sieb kann aus dem gleichen oder einem anderen Material als der Körper des Zentrierkonus ausgebildet sein.

Der Vorteil bei der Verwendung des gleichen Materials ist, dass sichergestellt werden kann, dass es bei Temperaturveränderungen nicht aufgrund unterschiedlicher Wärmedehnungskoeffizienten zu einer mangelhaften Abdichtung zwischen dem Körper des Zentrierkonus, sprich, der Innenwand der Durchlassöffnung, und dem Sieb kommt.

Der Vorteil der Verwendung unterschiedlicher Materialien ist, dass für das Sieb und für den Körper des Zentrierkonus jeweils das geeignetste Material gewählt werden kann und insbesondere für das Sieb ein Material verwendet werden kann, mit dem die Maschenweite des Siebs in der erforderlichen Größe vorteilhaft hergestellt werden kann.

Wenn der Zentrierkonus gemäß einer zweiten Alternative die mindestens zwei einzelnen Durchlassöffnungen umfasst, können die Durchlassöffnungen derart ausgebildet sein, dass, wenn gleichzeitig durch jede der Durchlassöffnungen Luft mit einem durch die Form der Durchlassöffnungen begrenzten maximalen Volumenstrom strömt, die Summe der Volumenströme größer oder gleich einem vorgegebenen Mindestvolumenstrom ist, insbesondere dem Volumenstrom, der zu einer Erhöhung des Innendrucks des Behälters erforderlich ist, die eine Stabilisierung des Behälters während der Fixierung mittels des Zentrierkonus gewährleistet. Insbesondere ist der vorgegebene Mindestvolumenstrom derart vorgegeben, dass innerhalb einer vorgegebener Zeit im Behälter ein vorgegebener Mindestdruck (Innendruck) hergestellt wird. Insbesondere kann der Mindestvolumenstrom so vorgegeben sein, dass er geeignet ist, um im Behälter einen Innendruck von 0,5 bis 0,8 Bar in einem Zeitraum von 50 bis 100 ms aufzubauen.

Die Form jeder der Durchlassöffnungen kann derart sein, dass sie verhindert, dass bestimmte im Luftstrom enthaltene Fremdpartikel Richtung Behälter aus dem Zentrierkonus heraus gelangen.

Wie diese Form bestimmt wird, hängt dabei beispielsweise davon ab, welche Art von Fremdpartikeln am Austritt gehindert werden sollen.

Die Form kann beispielsweise derart sein, dass das Strömungsverhalten der Luft in und durch die Durchlassöffnungen derart ist, dass mindestens ein vorgegebener Anteil der im Luftstrom enthaltenen Partikel sich an der Innenseite des Körpers des Zentrierkonus, insbesondere an und in der Durchlassöffnung absetzen.

Bei der Form der Durchlassöffnungen können insbesondere Werte der folgenden Parameter derart gewählt bzw. kombiniert werden, dass bestimmte im Luftstrom enthaltene Fremdpartikel Richtung Behälter aus dem Zentrierkonus heraus gelangen: Der Minimaldurchmesser der Durchlassöffnungen und/oder der Maximaldurchmesser der Durchlassöffnungen und/oder die Länge der Durchlassöffnungen und/oder die Änderungen des Durchmessers entlang der Durchlassöffnungen und/oder der Durchmesser der Durchlassöffnungen an einem der oder beiden Enden der jeweiligen Durchlassöffnung.

Jede der Durchlassöffnungen kann einen Minimaldurchmesser aufweisen, der kleiner oder gleich 4 mm, insbesondere, kleiner oder gleich 3 mm und größer oder gleich 1 mm ist, insbesondere etwa 2 mm ist. Dies ermöglicht, dass zwar genug Luft durch die Durchlassöffnungen strömen kann, aber zugleich die zurückzuhaltenden Fremdpartikel in ausreichendem Maß zurückgehalten werden.

Die Summe der minimalen Querschnittsflächen jeder der Durchlassöffnungen kann größer oder gleich einer Querschnittsfläche sein, die sich für eine Durchlassöffnung mit einem Durchmesser von 4 mm bis 8 mm, insbesondere 5 mm bis 7 mm, insbesondere 6 mm, ergeben würde.

Der Durchmesser jeder der Durchlassöffnungen kann entlang der jeweiligen Durchlassöffnung konstant sein, und die Summe der Querschnittsflächen aller Durchlassöffnungen kann größer oder gleich einer Querschnittsfläche sein, die sich für eine einzige Durchlassöffnung mit einem Durchmesser von 4 mm bis 8 mm, insbesondere 5 mm bis 7 mm, insbesondere 6 mm, ergeben würde.

Alle Durchlassöffnungen können den gleichen Durchmesser und insbesondere die gleiche Länge aufweisen. Eine solche Ausgestaltung ist leicht zu fertigen und führt zu einem gleichmäßigen Strömungsbild und einer ähnlichen Rückhaltewirkung der Durchlassöffnungen untereinander.

Mindestens eine, insbesondere jede, der Durchlassöffnungen kann eine sich nach außen, also im Betrieb zur Behälterseite, hin verjüngende Form aufweisen. Dies wirkt sich hinsichtlich der Stabilisierungswirkung positiv auf den Luftstrom aus.

Es versteht sich, dass grundsätzlich auch in der oben beschriebenen Ausführung mit mehreren Durchlassöffnungen ein Sieb gemäß der ersten Alternative vorgesehen sein kann.

Weitere Merkmale und Vorteile werden nachfolgend anhand der beispielhaften Figuren erläutert. Dabei zeigen:
Figur1 eine schematische, nicht maßstabsgetreue Querschnittsansicht einer Etikettiermaschine umfassend einen Zentrierkonus;
Figuren 2a und 2b schematische, nicht maßstabsgetreue Schrägansicht und Querschnittsansicht eines Zentrierkonus gemäß einer ersten Ausführungsform; und
Figuren 3a und 3b schematische, nicht maßstabsgetreue Schrägansicht und Querschnittsansicht eines Zentrierkonus gemäß einer zweiten Ausführungsform.

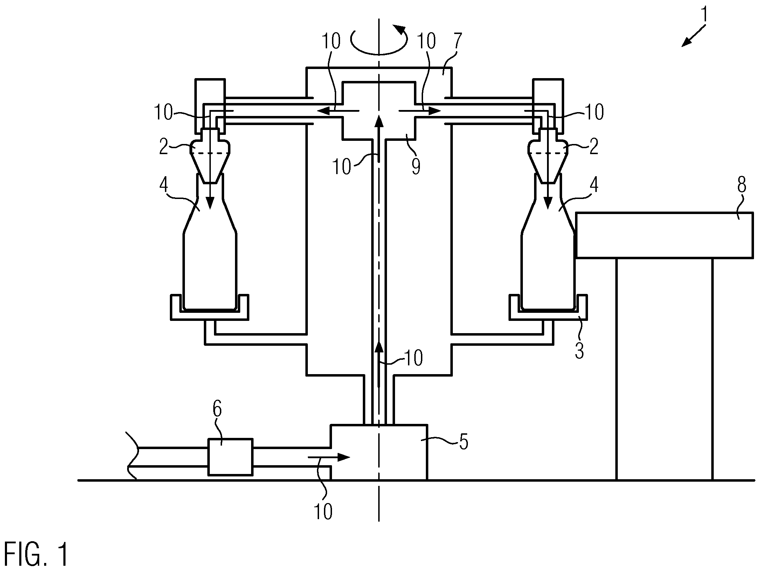

Figur 1 zeigt beispielhaft einen Querschnitt einer Etikettiermaschine 1 mit Zentrierkonen 2 und einem Zentrierteller 3. In der Figur ist auch gezeigt, dass auf den Zentriertellern je ein Behälter 4 steht und mittels des Zentrierkonus von oben fixiert wird. Dazu ist ein Ende des Zentrierkonus, nämlich das Ende, zu dem hin sich der Düsenkopf verjüngt, in den Flaschenhals eingeführt.

Weiterhin ist ein Luftdrehverteiler 5 gezeigt, dem durch einen Eingangsfilter 6 gefilterte Luft zugeführt wird und der diese Luft vom feststehenden Teil der Etikettiermaschine an das drehbare Etikettier-Karussell 7 überträgt. Das Etikettier-Karussell umfasst die Zentrierkonen und Zentrierteller und transportiert im Betrieb die Behälter auf den Zentriertellern stehend und durch die Zentrierkonen fixiert auf einem Teil einer Kreisbahn zum Etikettieraggregat 8. Das Etikettieraggregat ist am Umfang des Etikettier-Karussells angeordnet und bringt Etiketten auf die Behälter auf, während diese auf dem Zentrierteller stehen und durch die Zentrierkonen fixiert sind. Dabei können die Behälter insbesondere auch mittels der Zentrierteller um ihre Längsachse gedreht werden, beispielsweise beim Etikettieren mit umlaufenden Etiketten.

Das Etikettier-Karussell umfasst einen Luftverteiler 9 (Ringverteiler). Dieser verteilt die Luft derart, dass sie zu den Zentrierkonen strömt.

Jeder Zentrierkonus kann derart ausgebildet sein, dass die Luftzufuhr vom Ringverteiler zum Behälter mit einem Hubmechanismus freigeschaltet wird, wenn der Zentrierkonus auf den Behälter aufgesetzt wird. Der Hubmechanismus ermöglicht, dass die Luftzufuhr in den Behälter ohne Steuerung, lediglich durch das Platzieren des Behälters freigeschaltet wird.

Beispielsweise kann der Zentrierkonus derart ausgebildet und im Betrieb derart angeordnet sein, dass er einen in vertikaler Richtung verschiebbaren Abschnitt aufweist. Dieser Abschnitt kann derart ausgebildet sein, dass er (in Betriebsposition) durch einen in Arbeitsposition (also unterhalb des Zentrierkonus) befindlichen Behälter aus einer Ruheposition angehoben wird. Der Zentrierkonus umfasst dann ein Sperrelement, beispielsweise eine Kugel, das in einer Ruheposition des verschiebbaren Abschnitts durch die Schwerkraft und optional zusätzlich durch eine Feder in einer Sperrposition gehalten wird. Die Sperrposition ist eine Position, in der das Sperrelement die Luftzufuhr aus dem Ringverteiler blockiert. Der Zentrierkonus ist dann derart ausgebildet, dass durch Anheben des verschiebbaren Abschnitts aus der Ruheposition das Sperrelement aus der Sperrposition in eine Durchlassposition angehoben wird. Die Durchlassposition ist eine Position, in der das Sperrelement die Luftzufuhr nicht mehr blockiert, so dass Luft aus dem Ringverteiler durch den Zentrierkonus strömen kann. Beispielsweise kann im Strömungsweg der Luft eine Verengung vorgesehen sein, die von oben durch das Sperrelement vollständig blockiert wird, wenn sich dieses in der Sperrposition befindet, und freigegeben wird, wenn das Sperrelement angehoben wird.

Der Luftdrehverteiler 5 kann sich beispielsweise, wie hier gezeigt, unterhalb des Karussells befinden. Wenn die Luft dem Karussell von unten zugeführt wird, kann sie beispielsweise durch die Mittelwelle nach oben zum Luftverteiler 9 des Karussells geleitet werden. In diesem Fall ist die Mittelwelle als Hohlwelle ausgebildet, die einen Luftkanal für die zu verteilende Luft aufweist.

Die Richtung des Luftstroms durch die Etikettiermaschine ist durch Pfeile 10 angedeutet.

Alternativ dazu kann die Luft, statt durch einen Luftkanal in der Mittelwelle, durch einen Luftschlauch direkt vom Drehverteiler bis zum Ringverteiler geleitet werden. Grundsätzlich kann auch hier die Mittelwelle als Hohlwelle ausgebildet sein und der Luftschlauch durch die Hohlwelle hindurch verlegt sein. Der Luftschlauch kann beispielsweise aus Kunststoff wie PTFE ausgebildet sein. Der Luftschlauch kann beispielsweise einen Durchmesser zwischen 0,2 und 1 Zoll, insbesondere 0,4 und 0,8 Zoll, insbesondere 0,5 Zoll aufweisen. Um den Luftschlauch in Position zu halten, kann er an beiden Enden vorzugsweise am oberen Bereich des Luftdrehverteilers 5 und/oder am unteren Bereich des Luftverteilers 9 verschraubt sein.

In einer solchen Etikettiermaschine können die im Folgenden beschriebenen oder anders ausgebildete erfindungsgemäße Zentrierkonen verwendet werden. Es versteht sich, dass diese auch in anderen Maschinen verwendet werden können.

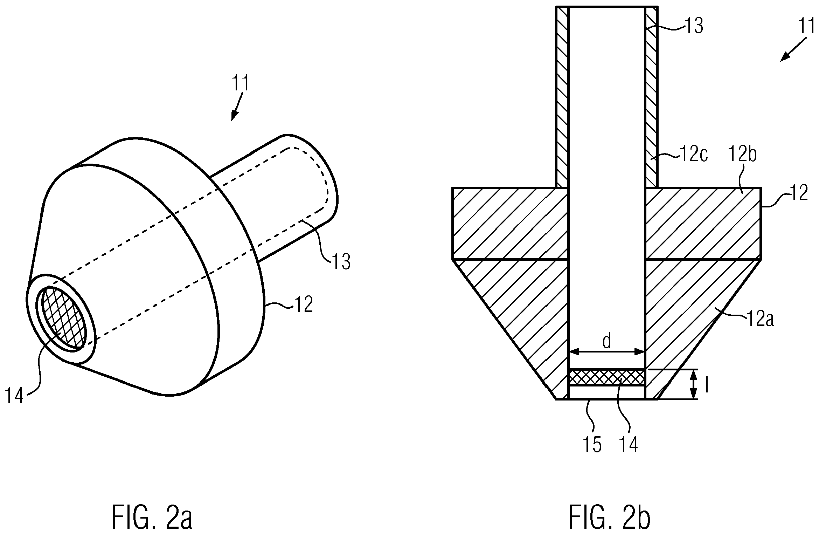

Figuren 2a und 2b zeigen eine Schrägansicht und einen Querschnitt eines Zentrierkonus 11 gemäß einer ersten Ausführungsform der Erfindung. Im Körper 12 des Zentrierkonus ist ein Luftkanal 13 ausgebildet, der sich hier entlang einer Längsachse des Zentrierkonus im Inneren des Zentrierkonus erstreckt.

In den Figuren ist erkennbar, dass der Zentrierkonus in diesem Beispiel einen Bereich 12a mit einer Kegelstumpfform mit kreisförmigen Querschnitt und mehrere Bereiche 12b, 12c mit Zylinderform aufweist, wobei sich die zylinderförmigen Bereiche an die Grundfläche des Kegelstumpfs anschließen. Dies ist jedoch rein beispielhaft und verschiedenste andere Formen des Zentrierkonus sind denkbar, beispielsweise mit einer nicht-kreisförmigen Querschnittsfläche.

An dem Ende des Zentrierkonus, zu dem hin sich der Körper des Zentrierkonus, insbesondere der Bereich mit der Kegelstumpfform, verjüngt, was im Betrieb das behälterseitige Ende ist, ist der Luftauslass 14 des Zentrierkonus angeordnet.

Hier hat der Zentrierkonus einen Luftauslass, der durch genau eine Durchlassöffnung und ein darin angeordnetes Sieb 15 gebildet wird. Das Sieb kann, insbesondere lösbar, in der Betriebsposition befestigt sein.

Die Durchlassöffnung hat hier beispielhaft entlang ihrer gesamten Länge I einen kreisförmigen Querschnitt mit konstantem Durchmesser d, wobei andere Formen ebenso denkbar sind.

Wenn Luft durch den Luftauslass in den Behälter strömt, strömt sie auch durch das in der Durchlassöffnung angeordnete Sieb. Das Sieb verhindert, dass bestimmte Fremdpartikel im Luftstrom in den Behälter gelangen, indem diese durch das Sieb zurückgehalten werden. Insbesondere können die Fremdpartikel so den Zentrierkonus im Normalbetrieb nicht verlassen. Die Maschenweite des Siebs kann gemäß dem erwarteten Abrieb, insbesondere gemäß der erwarteten Größe der Fremdpartikel, gewählt werden.

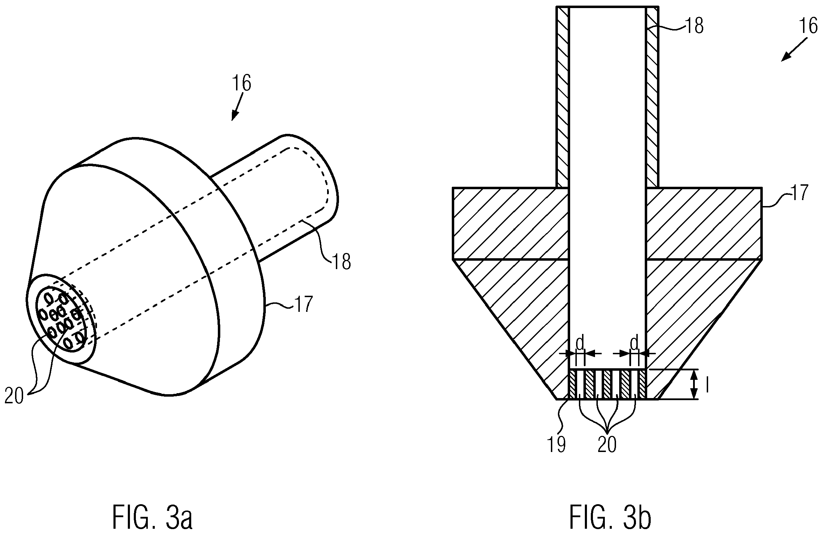

Figuren 3a und 3b zeigen eine Schrägansicht und einen Querschnitt des Zentrierkonus 16 gemäß einer zweiten Ausführungsform. Wie in der ersten Ausführungsform ist auch hier im Körper 17 des Zentrierkonus ein Luftkanal 18 ausgebildet. Auch hier ist an dem Ende des Zentrierkonus, zu dem hin sich der Zentrierkonus verjüngt, was im Betrieb das behälterseitige Ende ist, der Luftauslass 19 des Zentrierkonus angeordnet.

Anders als in der ersten Ausführungsform hat der Zentrierkonus hier einen Luftauslass, der von mehreren Durchlassöffnungen 20 gebildet wird. Ein Sieb ist hier nicht vorgesehen, wobei auch das optional denkbar wäre.

Die Durchlassöffnungen haben in diesem Beispiel jeweils eine kreisförmige Querschnittsfläche und einen entlang ihrer Länge I konstanten Durchmesser d. Andere Formen sind jedoch ebenfalls denkbar.

## Patentansprüche

1. Zentrierkonus (2, 11, 16) zum Fixieren eines, insbesondere auf einem Zentrierteller (3), stehenden Behälters (4) und zum Zuführen von Reinluft in den Behälter (4) zur Erhöhung des Innendrucks des Behälters (4) durch einen Luftauslass (15, 19) des Zentrierkonus (2, 11, 16) hindurch,
**dadurch gekennzeichnet, dass**
der Luftauslass (15, 19) von einer Durchlassöffnung mit einem Sieb (14) gebildet wird oder
der Luftauslass (15, 19) von mindestens zwei einzelnen Durchlassöffnungen (20) gebildet wird.

2. Zentrierkonus (2, 11) nach Anspruch 1 umfassend das Sieb (14), wobei das Sieb (14) lösbar in der Betriebsposition befestigbar ist, insbesondere mittels einer werkzeuglosen Verbindung, beispielsweise einer Steckverbindung.

3. Zentrierkonus (2, 11) nach Anspruch 1 oder 2 umfassend das Sieb (14), wobei das Sieb (14) aus dem gleichen oder einem anderen Material als ein Körper (12) des Zentrierkonus (2, 11) ausgebildet ist.

4. Zentrierkonus (2, 16) nach Anspruch 1 umfassend die mindestens zwei einzelnen Durchlassöffnungen (20), wobei die Durchlassöffnungen (20) derart ausgebildet sind, dass, wenn gleichzeitig durch jede der Durchlassöffnungen (20) Luft mit einem durch die Form der Durchlassöffnungen (20) begrenzten maximalen Volumenstrom strömt, die Summe der Volumenströme größer oder gleich einem vorgegebenen Mindestvolumenstrom ist, insbesondere dem Volumenstrom, der zu einer Erhöhung des Innendrucks des Behälters (4) erforderlich ist, die eine Stabilisierung des Behälters (4) während der Fixierung mittels des Zentrierkonus (2, 16) gewährleistet.

5. Zentrierkonus (2, 16) nach Anspruch 1 oder 4 umfassend die mindestens zwei einzelnen Durchlassöffnungen (20), wobei die Form jeder der Durchlassöffnungen (20) verhindert, dass im Luftstrom enthaltene Fremdpartikel Richtung Behälter (4) aus dem Zentrierkonus (2, 16) heraus gelangen.

6. Zentrierkonus (2, 16) nach Anspruch 1, 4 oder 5 umfassend die mindestens zwei einzelnen Durchlassöffnungen (20), wobei jede der Durchlassöffnungen (20) einen Minimaldurchmesser aufweist, der kleiner oder gleich 4 mm, insbesondere, kleiner oder gleich 3 mm, insbesondere kleiner oder gleich 2 mm beträgt und größer oder gleich 1 mm ist.

7. Zentrierkonus (2, 16) nach Anspruch 1, 4, 5 oder 6 umfassend die mindestens zwei einzelnen Durchlassöffnungen (20), wobei die Summe der minimalen Querschnittsflächen jeder der Durchlassöffnungen (20), größer oder gleich einer Querschnittsfläche ist, die sich für eine Durchlassöffnung mit einem Durchmesser von größer oder gleich 6 mm ergeben würde.

8. Zentrierkonus (2, 16) nach Anspruch 1, 4, 5, 6 oder 7 umfassend die mindestens zwei einzelnen Durchlassöffnungen (20), wobei der Durchmesser (d) jeder der Durchlassöffnungen (20) entlang der jeweiligen Durchlassöffnung (20) konstant ist, und die Summe der Querschnittsflächen aller Durchlassöffnungen (20) größer oder gleich einer Querschnittsfläche ist, die sich für eine einzige Durchlassöffnung mit einem Durchmesser von mindestens 6 mm ergeben würde.

9. Zentrierkonus (2, 16) nach Anspruch 1, 4, 5, 6, 7 oder 8 umfassend die mindestens zwei einzelnen Durchlassöffnungen (20), wobei alle Durchlassöffnungen (20) den gleichen Durchmesser (d) und insbesondere die gleiche Länge (I) aufweisen.

10. Zentrierkonus (2, 16) nach Anspruch 1, 4, 5, 6, 7, 8 oder 9 umfassend die mindestens zwei einzelnen Durchlassöffnungen (20), wobei mindestens eine oder mehrere, insbesondere jede, der Durchlassöffnungen (20) eine sich nach außen, also im Betrieb zur Behälterseite, hin verjüngende Form aufweist.

## Claims

1. A centering cone (2, 11, 16) for fixing a container (4), in particular a container (4) standing on a centering plate (3), and for supplying clean air into the container (4) through an air outlet (15, 19) of the centering cone (2, 11, 16) so as to increase the internal pressure of the container (4),
**characterized in that**
the air outlet (15, 19) is defined by a passage opening with a screen (14), or
the air outlet (15, 19) is defined by at least two individual passage openings (20).

2. The centering cone (2, 11) according to claim 1, comprising the screen (14), wherein the screen (14) is adapted to be releasably fixed at the operating position, in particular by means of a toolless connection, e.g. a plug connection.

3. The centering cone (2, 11) according to claim 1 or 2, comprising the screen (14), wherein the screen (14) is formed from a material corresponding to or differing from the material of a body (12) of the centering cone (2, 11).

4. The centering cone (2, 16) according to claim 1, comprising the at least two individual passage openings (20), wherein the passage openings (20) are configured such that, when air flows simultaneously through each of the passage openings (20) with a maximum volume flow limited by the shape of the passage openings (20), the sum of the volume flows will be greater than or equal to a predetermined minimum volume flow, in particular the volume flow required to increase the internal pressure of the container (4), which ensures stabilization of the container (4) during fixing by means of the centering cone (2, 16).

5. The centering cone (2, 16) according to claim 1 or 4, comprising the at least two individual passage openings (20), wherein the shape of each of the passage openings (20) prevents foreign particles contained in the air flow from exiting the centering cone (2, 16) in the direction of the container (4).

6. The centering cone (2, 16) according to claims 1, 4 or 5, comprising the at least two individual passage openings (20), wherein each of the passage openings (20) has a minimum diameter, which is smaller than or equal to 4 mm, in particular smaller than or equal to 3 mm, in particular smaller than or equal to 2 mm and is larger than or equal to 1 mm.

7. The centering cone (2, 16) according to claims 1, 4, 5 or 6, comprising the at least two individual passage openings (20), wherein the sum of the minimum cross-sectional areas of each of the passage openings (20) is greater than or equal to a cross-sectional area that would be obtained for a passage opening having a diameter greater than or equal to 6 mm.

8. The centering cone (2, 16) according to claims 1, 4, 5, 6 or 7, comprising the at least two individual passage openings (20), wherein the diameter (d) of each of the individual passage openings (20) is constant along the respective passage opening (20), and the sum of the cross-sectional areas of all the passage openings (20) is greater than or equal to a cross-sectional area that would be obtained for a single passage opening having a diameter of at least 6 mm.

9. The centering cone (2, 16) according to claims 1, 4, 5, 6, 7 or 8, comprising the at least two individual passage openings (20), wherein all the passage openings (20) have the same diameter (d) and in particular the same length (I).

10. The centering cone (2, 16) according to claims 1, 4, 5, 6, 7, 8 or 9, comprising the at least two individual passage openings (20), wherein at least one or a plurality of, in particular each of, the passage openings (20) has a shape tapering outwards, i.e. towards the container side during operation.

## Revendications

1. Cône de centrage (2, 11, 16) permettant d'immobiliser un récipient (4) debout, en particulier sur un plateau de centrage (3), et permettant d'introduire de l'air pur dans le récipient (4) grâce à une sortie d'air (15, 19) du cône de centrage (2, 11, 16) afin d'augmenter la pression interne du récipient (4),
**caractérisé en ce que**
la sortie d'air (15, 19) est constituée d'un orifice de passage muni d'un tamis (14) ou
la sortie d'air (15, 19) est constituée d'au moins deux orifices de passage (20) individuels.

2. Cône de centrage (2, 11) selon la revendication 1, comprenant le tamis (14), dans lequel le tamis (14) peut être fixé de manière amovible dans la position de fonctionnement, en particulier au moyen d'une liaison sans outil, par exemple une liaison enfichable.

3. Cône de centrage (2, 11) selon la revendication 1 ou 2, comprenant le tamis (14), dans lequel le tamis (14) est réalisé à partir du même matériau ou d'un autre matériau que celui d'un corps (12) du cône de centrage (2, 11).

4. Cône de centrage (2, 16) selon la revendication 1, comprenant les au moins deux orifices de passage (20) individuels, dans lequel les orifices de passage (20) sont réalisés de telle manière que, lorsque de l'air s'écoule simultanément à travers chacun des orifices de passage (20) avec un débit volumétrique maximal limité par la forme des orifices de passage (20), la somme des débits volumétriques est supérieure ou égale à un débit volumétrique minimal prédéfini, en particulier au débit volumétrique nécessaire pour une augmentation de la pression interne du récipient (4) garantissant une stabilisation du récipient (4) pendant l'immobilisation au moyen du cône de centrage (2, 16).

5. Cône de centrage (2, 16) selon la revendication 1 ou 4 comprenant les au moins deux orifices de passage (20) individuels, dans lequel la forme de chacun des orifices de passage (20) empêche des particules étrangères contenues dans le flux d'air de sortir du cône de centrage (2, 16) vers le récipient (4).

6. Cône de centrage (2, 16) selon la revendication 1, 4 ou 5 comprenant les au moins deux orifices de passage (20) individuels, dans lequel chacun des orifices de passage (20) présente un diamètre minimum inférieur ou égal à 4 mm, en particulier inférieur ou égal à 3 mm, en particulier inférieur ou égal à 2 mm et supérieur ou égal à 1 mm.

7. Cône de centrage (2, 16) selon la revendication 1, 4, 5 ou 6 comprenant les au moins deux orifices de passage (20) individuels, dans lequel la somme des surfaces de section transversale minimales de chacun des orifices de passage (20) est supérieure ou égale à une surface de section transversale qui résulterait d'un orifice de passage d'un diamètre supérieur ou égal à 6 mm.

8. Cône de centrage (2, 16) selon la revendication 1, 4, 5, 6 ou 7 comprenant les au moins deux orifices de passage (20) individuels, dans lequel le diamètre (d) de chacun des orifices de passage (20) le long de l'orifice de passage (20) respectif est constant, et la somme des surfaces de section transversale de tous les orifices de passage (20) est supérieure ou égale à une surface de section transversale qui résulterait d'un orifice de passage unique d'un diamètre d'au moins 6 mm.

9. Cône de centrage (2, 16) selon la revendication 1, 4, 5, 6, 7 ou 8 comprenant les au moins deux orifices de passage (20) individuels, dans lequel tous les orifices de passage (20) présente le même diamètre (d) et en particulier la même longueur (I).

10. Cône de centrage (2, 16) selon la revendication 1, 4, 5, 6, 7, 8 ou 9 comprenant les au moins deux orifices de passage (20) individuels, dans lequel au moins un ou plusieurs orifice(s) de passage (20), en particulier chacun d'entre eux, présente(nt) une forme se rétrécissant vers l'extérieur, c'est-à-dire vers le récipient lorsqu'il y a fonctionnement.
